# EUROPÄISCHE PATENTSCHRIFT

(11) **EP 2 040 224 B1**
(45) Veröffentlichungstag und Bekanntmachung des Hinweises auf die Patenterteilung: **23.12.2009**
(21) Anmeldenummer: 07018591.3
(22) Anmeldetag: 21.09.2007
(51) Int. Cl.: G07C 9/00, B60R 25/00, E05B 19/00

(54) **Kraftfahrzeugschlüssel**
Motor vehicle key
Serrure de véhicule automobile

(43) Veröffentlichungstag der Anmeldung: 25.03.2009
(73) Patentinhaber: Delphi Technologies, Inc., Troy, Michigan 48007 (US)
(72) Erfinder: Hombach, Frank, 51674 Wiehl (DE); Hupertz, Stefan, 57462 Olpe (DE); Noll, Diethelm, 57589 Birkenbeul (DE)
(74) Vertreter: Denton, Michael John

(56) Entgegenhaltungen:
- WO-A-2006/078810
- DE-U1-202005 001 972
- US-A1- 2005 215 286

## Beschreibung

Die vorliegende Erfindung betrifft einen Schlüssel für ein Kraftfahrzeug, welcher zumindest einen mechanisch codierten Eingriffsabschnitt wie beispielsweise einen Schlüsselbart zur Entriegelung eines mechanischen Fahrzeugschlosses und eine mit einem Datenspeicher gekoppelte USB-Steckschnittstelle zum Datenaustausch von auf dem Datenspeicher speicherbaren Daten aufweist.

Um das Zündschloss oder ein anderes Schloss eines Fahrzeugs wie beispielsweise ein Tür-, Kofferraum- oder Tankschloss zu betätigen, wird üblicherweise ein Schlüssel benötigt, welcher einen mechanisch codierten Eingriffsabschnitt in Form eines Schlüsselbarts aufweist, welcher zur Betätigung des jeweiligen Schlosses in dasselbe eingeführt werden muss. Sofern der Schlüssel und das Fahrzeugschloss zusammengehören, lässt sich dann der Schlüssel in dem Fahrzeugschloss zur Betätigung bzw. Entriegelung desselben drehen.

Um die Sicherheit von Schlössern hinsichtlich unberechtigter Betätigung zu erhöhen, zielten die Anstrengungen in der Vergangenheit primär darauf ab, die Mechanik der Schlösser zu verbessern, was zu zunehmend komplexen mechanisch codierten Eingriffsabschnitten an den zugehörigen Schlüsseln führte. Da jedoch die mechanische Codierung von Eingriffsabschnitten aufgrund des begrenzten Platzangebots am Schlüsselbart gewisse Grenzen aufweist, besteht ein Bedarf danach, einen in Bezug auf sicherheitstechnische Belange verbesserten Schlüssel zu schaffen.

Aus der Patentanmeldung US 2005/0215286 A1 ist ein elektronischer Schlüssel für ein Kraftfahrzeug bekannt, welcher eine USB Steckschnittstelle aufweist, aber auf eine Sicherung durch einen mechanischen Schlüsselbart vollständig verzichtet.

Der Erfindung liegt somit die Aufgabe zugrunde, einen in Bezug auf sicherheitstechnische Belange verbesserten Fahrzeugschlüssel zu schaffen.

Diese Aufgabe wird mit einem Schlüssel für ein Kraftfahrzeug gelöst, welcher die Merkmale des Anspruchs 1 aufweist.

Insbesondere wird die der Erfindung zugrunde liegende Aufgabe dadurch gelöst, dass der Schlüssel eine mit einem Datenspeicher gekoppelte USB-Steckschnittstelle zum Datenaustausch von auf dem Datenspeicher speicherbaren Daten aufweist, wobei der codierte Eingriffsabschnitt des Schlüssels sowie die USB-Steckschnittstelle an einem gemeinsamen, in das Fahrzeugschloss einführbaren Steckglied vorgesehen sind, welches bei der Betätigung des Schlosses von demselben aufgenommen wird.

Bei den von dem Datenspeicher speicherbaren Daten kann es sich beispielsweise um Legitimierungsdaten handeln, welche, sofern der jeweilige Schlüssel tatsächlich zu dem jeweiligen Schloss bzw. Kraftfahrzeug gehört, dazu berechtigen, das Fahrzeugschloss zu betätigen bzw. zu entriegeln. Hierzu können die in dem Datenspeicher des Schlüssels hinterlegten Legitimierungsdaten über die USB-Steckschnittstelle ausgelesen und anschließend dahingehend überprüft werden, ob sie den Daten entsprechen, welche zur Betätigung des jeweiligen Schlosses oder beispielsweise einer durch die Betätigung des jeweiligen Schlosses deaktivierbaren Wegfahrsperre legitimieren. Sollte beispielsweise bei diesem Datenabgleich festgestellt werden, dass die auf dem Datenspeicher des Schlüssels gespeicherten Daten nicht zur Betätigung des Schlosses oder einer mit dem Schloss deaktivierbaren Wegfahrsperre legitimieren, so bleibt das Schloss verriegelt und/oder die Deaktivierung der Wegfahrsperre wird auf elektronischem Wege verhindert.

Im Falle, dass zwar der mechanisch codierte Eingriffsabschnitt zu dem jeweiligen Fahrzeugschloss passen sollte, die auf dem Datenspeicher gespeicherten Daten jedoch nicht zur Betätigung des jeweiligen Schlosses legitimieren, kann die Entriegelung des Schlosses beispielsweise dadurch verhindert werden, dass das Schloss eine Verriegelungseinheit enthält, welche sich nur dann, wenn die in dem Datenspeicher gespeicherten Daten zur Entriegelung des Schlosses legitimieren, selbsttätig entriegelt, sodass erst dann das Fahrzeugschloss betätigt werden kann.

Die Betätigung eines Fahrzeugschlosses ist somit nur dann möglich, wenn sowohl der mechanisch codierte Eingriffsabschnitt des Schlüssels als auch die auf dem Datenspeicher des Schlüssels gespeicherten Daten, welche über die USB-Steckschnittstelle ausgelesen werden können, zu dem jeweiligen Schloss gehören.

Wenn jedoch beispielsweise der mechanisch codierte Eingriffsabschnitt nicht zu dem jeweiligen Fahrzeugschloss gehört, so lässt sich entweder der Schlüssel erst gar nicht in das Fahrzeugschloss einführen, sodass selbst dann, wenn die auf dem Datenspeicher gespeicherten Daten zur Betätigung des Schlosses legitimieren würden, eine Entriegelung des Schlosses nicht möglich ist. Ebenfalls wäre es möglich, dass sich zwar der mechanisch codierte Eingriffsabschnitt in das Schloss einführen ließe, obwohl dessen (mechanische) Codierung nicht zu dem Schloss passt, sodass selbst dann, wenn die auf dem Datenspeicher gespeicherten Daten zur Entriegelung des Schlosses legitimieren würden, eine Entriegelung desselben unterbunden wird. Wenn andererseits zwar der mechanisch codierte Eingriffsabschnitt zu dem jeweiligen Fahrzeugschloss passt, jedoch die auf dem Datenspeicher gespeicherten Daten nicht zur Entriegelung des Schlosses legitimieren, bleibt eine Betätigung des Schlosses und damit beispielsweise auch eine Deaktivierung einer elektronischen Wegfahrsperre unterbunden.

Nur wenn sowohl der mechanisch codierte Eingriffsabschnitt als auch die auf dem Datenspeicher gespeicherten Daten zur Entriegelung des jeweiligen Schlosses legitimieren, wird somit eine Betätigung eines Fahrzeugschlosses mit dem erfindungsgemäßen Schlüssel ermöglicht. Mit dem erfindungsgemäßen Schlüssel wird somit ein redundantes Sicherheitskonzept zur Verfügung gestellt, welches nur dann eine Entriegelung eines Fahrzeugschlosses ermöglicht, wenn sowohl der mechanisch codierte Eingriffsabschnitt des Schlüssels als auch die auf dem Datenspeicher gespeicherten Daten zur Entriegelung des jeweiligen Schlosses legitimieren.

Im Folgenden wird auf bevorzugte Ausführungsformen des erfindungsgemäßen Schlüssels eingegangen, welche sich auch aus den Unteransprüchen, der Figurenbeschreibung sowie den Zeichnungen ergeben.

So können der zumindest eine mechanisch codierten Eingriffsabschnitt und die USB-Steckschnittstelle in Steckrichtung betrachtet hintereinander an dem Steckglied vorgesehen sein. Sofern hier davon die Rede ist, dass der mechanisch codierte Eingriffsabschnitt und die USB-Steckschnittstelle hintereinander an dem Steckglied vorgesehen sind, so bedeutet dies, dass beim Einführen des Steckglieds in ein Fahrzeugschloss zunächst der mechanisch codierte Eingriffsabschnitt und dann erst die USB-Steckschnittstelle in das Fahrzeugschloss eindringt oder dass umgekehrt zunächst die USB-Steckschnittstelle und anschließend erst der mechanisch codierte Eingriffsabschnitt in das Fahrzeugschloss eindringt.

So kann beispielsweise der zumindest eine mechanisch codierte Eingriffsabschnitt am freien Ende des Steckglieds in Fortsetzung zu der USB-Steckschnittstelle ausgebildet sein. Sofern hier von einem freien Ende des Steckglieds die Rede ist, so ist davon auszugehen, dass das Steckglied wie ein gewöhnlicher Schlüsselbart von der Reide, also demjenigen Teil des Schlüssels, an dem ihn ein Benutzer üblicherweise anfasst, absteht, sodass es sich bei dem freien Ende des Steckglieds um das der Reide gegenüberliegende Ende des Steckglieds handelt.

Diese Ausführungsform, bei der sich die USB-Steckschnittstelle näher an der Reide als der mechanisch codierte Eingriffsabschnitt befindet, erweist sich dahingehend als vorteilhaft, dass dadurch die den Datenspeicher, welcher sich in der Reide des Schlüssels befinden kann, und die USB-Steckschnittstelle verbindenden Leitungen aufgrund der Nähe der USB-Steckschnittstelle zu der Reide verhältnismäßig kurz sind. Insbesondere ist es dabei nicht erforderlich, die genannten Leitungen über die gesamte Länge des mechanisch codierten Eingriffsabschnitts hinwegzuführen, was eine Verlegung der Leitungen innerhalb des Steckglieds erforderlich machen würde.

Gemäß einer anderen Ausführungsform ist es auch möglich, die USB-Steckschnittstelle am freien Ende des Steckglieds in Fortsetzung zu dem zumindest einen mechanisch codierten Eingriffsabschnitt vorzusehen. Diese Ausführungsform, bei der sich der mechanisch codierte Eingriffsabschnitt näher bei der Reide des Schlüssels befindet als die USB-Steckschnittstelle kann sich dahingehend als vorteilhaft erweisen, dass dadurch die Ausbildung des zu dem Schlüssel zugehörigen Fahrzeugschlosses einfacher ausfällt. So kann sich in diesem Falle die schlossseitige USB-Schnittstelle, die mit der USB-Steckschnittstelle des Schlüssels zum Auslesen der Daten auf dem Datenspeicher des Schlüssels gekoppelt werden muss, am Ende des Schließzylinders des Fahrzeugschlosses befinden, was sich insbesondere aufgrund der Leitungsverlegung zu der USB-Schnittstelle des Fahrzeugsschlosses als einfacher erweist, als wenn die USB-Schnittstelle an der Einführöffnung des Schlosses sich befindet, wozu die Leitungen über die gesamte Länge des Schließzylinders hinweg verlegt werden müssten.

Um dem erfindungsgemäßen Schlüssel eine möglichst kompakte Form verleihen zu können, kann der zumindest eine mechanisch codierte Eingriffsabschnitt im Bereich der USB-Schnittstelle und insbesondere über deren Stecklänge hinweg ausgebildet sein. So weist beispielsweise ein herkömmlicher USB-Stecker vom Typ A oder vom Typ B eine ausreichende Stecklänge auf, um dessen metallisches Steckergehäuse, außenseitig mit einer mechanischen Codierung wie beispielsweise Eintiefungen, Ausbuchtungen, Ausnehmungen oder dergleichen zu versehen, sodass das metallische Steckergehäuse solch eines USB-Steckers vom Typ A oder vom Typ B gleichzeitig als mechanisch codierter Eingriffsabschnitt fungiert, wodurch eine sehr kompakte Bauform des erfindungsgemäßen Schlüssels erreicht werden kann.

Da das Steckergehäuse eines herkömmlichen USB-Steckers üblicherweise aus einem ausgestanzten Metallblech besteht, welchem durch Biegen die Form des Steckergehäuses verliehen wird, bei der sich zwei Randbereiche der das Steckergehäuse bildenden Ummantelung in Form des gebogenen Blechs gegenüberliegen, ist es erfindungsgemäß vorgesehen, dass der mechanisch codierte Eingriffsabschnitt an zumindest einem der Randbereiche ausgebildet ist. Der mechanisch codierte Eingriffsabschnitt kann somit bereits beim Ausstanzen des Blechs erzeugt werden, sodass keine aufwändige Nachbearbeitung erforderlich ist, um das Steckgehäuse mit einer mechanischen Codierung zu versehen.

Insbesondere wenn die USB-Steckschnittstelle am freien Ende des Steckglieds in Fortsetzung zu dem zumindest einen mechanisch codierten Eingriffsabschnitt ausgebildet ist, kann es sich als vorteilhaft erweisen, die USB-Steckschnittstelle als USB-Stecker vom Typ Mini-A, Mini-B oder Mini-AB auszubilden, um die Abmessungen des Steckglieds an seinem freien Ende gering zu halten.

Gemäß einem weiteren Aspekt der vorliegenden Erfindung kann es sich bei dem erfindungsgemäßen Fahrzeugschlüssel um einen elektronischen Fahrzeugschlüssel handeln, welcher in der erfindungsgemäßen Art und Weise ein Steckglied aufweist, an dem sowohl die USB-Steckschnittstelle als auch der mechanisch codierte Eingriffsabschnitt ausgebildet ist.

Da ein derartiger elektronischer Fahrzeugschlüssel üblicherweise eine oder mehrere Batterien aufweist, besteht grundsätzlich jedoch die Gefahr, dass sich mit einem derartigen elektronischen Fahrzeugschlüssel die Schlösser eines Kraftfahrzeugs nicht mehr betätigen lassen, wenn der Ladungszustand der Batterien zu niedrig ist. Dementsprechend erweist es sich als vorteilhaft, einen derartigen elektronischen Fahrzeugschlüssel in der erfindungsgemäßen Art und Weise mit einer USB-Schnittstelle zu versehen, da über diese USB-Steckschnittstelle die Batterie des elektronischen Fahrzeugschlüssels jedes Mal dann aufgeladen werden kann, wenn sich der Schlüssel im Zündschloss befindet.

So weist nämlich üblicherweise eine USB-Schnittstelle zumindest vier Kontakte auf, wobei über zwei dieser Kontakte eine Stromversorgung der an die USB-Schnittstelle angeschlossenen Geräte vorgenommen wird. Dementsprechend kann über diese beiden Kontakte der USB-Steckschnittstelle eine Aufladung der Batterien des elektronischen Fahrzeugschlüssels vorgenommen werden, sodass deren ordnungsgemäßer Ladungszustand aufrechterhalten oder wieder hergestellt werden kann.

Im Folgenden wird nun die Erfindung rein exemplarisch anhand dreier unterschiedlicher, beispielhafter Ausführungsformen unter Bezugnahme auf die beigefügten Zeichnungen beschrieben, wobei:
- Fig. 1: eine schematische Darstellung einer ersten Ausführungsform eines erfindungsgemäßen Schlüssels zeigt;
- Fig. 2: eine schematische Darstellung einer zweiten Ausführungsform eines erfindungsgemäßen Schlüssels zeigt; und
- Fig. 3: eine schematische Darstellung einer dritten Ausführungsform eines erfindungsgemäßen Schlüssels zeigt.

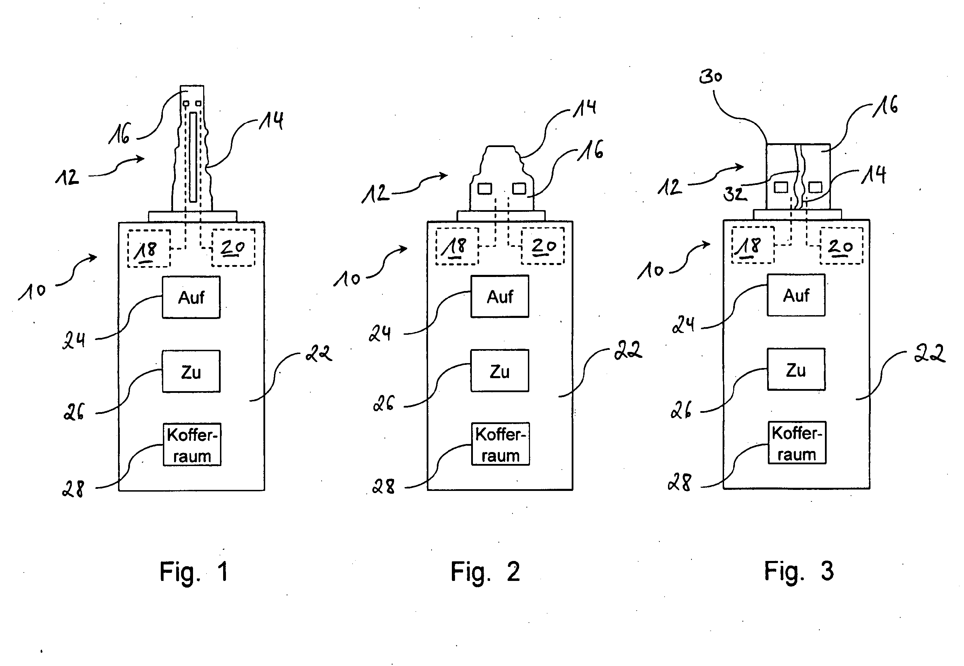

Die Fig. 1 zeigt eine erste Ausführungsform eines erfindungsgemäßen Schlüssels 10, bei dem es sich in der hier dargestellten Ausführungsform um einen elektronischen Fahrzeugschlüssel 10 handelt. Zur Betätigung beispielsweise der Türschlösser eines Kraftfahrzeugs weist der Fahrzeugschlüssel 10 zwei Tasten 24, 26 auf, durch deren Betätigung sich das Türschloss öffnen bzw. schließen lässt. Darüber hinaus weist der dargestellte Fahrzeugschlüssel 10 eine dritte Taste 28 auf, durch deren Betätigung sich ausschließlich das Kofferraumschloss öffnen lässt.

Um in der voran beschriebenen Art und Weise ein Schloss betätigen zu können, ist es erforderlich, ein Betätigungssignal an eine Empfangseinrichtung des Kraftfahrzeugs zu senden, welche, sofern das von dem Schlüssel 10 ausgesandte Signal zur Betätigung eines der genannten Schlösser legitimiert, beispielsweise das Türschloss öffnet oder schließt oder das Kofferraumschloss öffnet. Zur Erzeugung der genannten Sendesignale weist der elektrische Fahrzeugschlüssel 10 eine hier nicht dargestellte Sendeeinheit auf, welche von einer in der Reide 22 des Schlüssels 10 beinhalteten Batterie 20 mit Strom versorgt wird.

Sollte der Ladezustand der Batterie 20 jedoch zu niedrig sein, so ist es nicht möglich, mit Hilfe des elektrischen Fahrzeugschlüssels 10 die zur Betätigung der genannten Schlösser erforderlichen Signale zu erzeugen. Dementsprechend weist der erfindungsgemäße Schlüssel 10 ein als Ganzes mit dem Bezugszeichen 12 bezeichnetes Steckglied auf, an dem eine USB-Steckschnittstelle 16 und ein mechanisch codierter Eingriffsabschnitt 14 als mechanischer Schlüsselbart ausgebildet sind. Das Steckglied 12 dient dabei gewissermaßen als Backup- bzw. als Ersatzschlüssel, mit dem sich ein Fahrzeugschloss betätigen lässt.

Um erhöhten Sicherheitsanforderungen zu genügen, ist dabei bei dem in der Fig. 1 dargestellten Schlüssel 10 am freien Ende des Steckglieds 10 die USB-Steckschnittstelle 16 in Fortsetzung zu dem mechanisch codierten Eingriffsabschnitt 14 vorgesehen. Die USB-Steckschnittstelle 16 ist dabei mit einem Datenspeicher 18 in der Reide 22 gekoppelt, auf den Daten gespeichert sind, die gegebenenfalls zur Betätigung eines Schlosses legitimieren. Eine Betätigung des jeweiligen Fahrzeugschlosses ist dabei jedoch nur möglich, wenn sowohl die auf dem Datenspeicher 18 gespeicherten Daten als auch die mechanische Codierung des Eingriffsabschnitts 14 zu dem jeweiligen Fahrzeugschloss gehören, sodass durch die USB-Steckschnittstelle 16 und den mechanisch codierten Eingriffsabschnitt 14 gewissermaßen ein redundantes Sicherheitskonzept zur Verfügung gestellt wird.

Da es sich bei dem Steckglied 12 wie bei einem herkömmlichen Schlüsselbart um ein verhältnismäßig schlankes, schmales Bauteil handeln kann, an dessen Spitze nur verhältnismäßig wenig Platz zur Ausbildung einer USB-Steckschnittstelle zur Verfügung steht, ist die USB-Steckschnittstelle 16 vorzugsweise als USB-Stecker vom Typ Mini-A, Mini-B oder Mini-AB ausgebildet. Die genannten standardisierten Mini-USB-Stecker sind nämlich verhältnismäßig kleinbauend und lassen sich somit ohne weiteres am freien Ende des Steckglieds 12 ausbilden.

Wie der Darstellung gemäß Fig. 1 ferner entnommen werden kann, ist die USB-Steckschnittstelle 16 in der erfindungsgemäßen Art und Weise mit der Batterie 20 gekoppelt. Im Falle, dass die Batterie 20 einen zu niedrigen Ladezustand aufweisen sollte, kann daher, nachdem sich ein Benutzer über die Backup-Funktion des Schlüssels Zugang zum Fahrzeug verschafft hat, über die USB-Steckschnittstelle 16 die Batterie 20 wieder geladen werden. So kann die Batterie 20 beispielsweise über die USB-Steckschnittstelle 16 jedes mal dann geladen werden, wenn die USB-Steckschnittstelle 16 mit einer im Zündschloss zugehörige USB-Schnittstelle gekoppelt wird, welche über die Stromversorgung des Kraftfahrzeugs gespeist wird.

Da das Steckglied 12 mit der daran ausgebildeten USB-Steckschnittstelle 16 und dem mechanisch codierten Eingriffsabschnitt 14 gewissermaßen als Backup-Lösung bzw. als Ersatzschlüssel dient und somit im Regelfall nicht zum Einsatz kommt, kann das Steckglied 12 für den normalen Gebrauch des Schlüssels 10 durch eine Abdeckkappe (nicht dargestellt) abgedeckt sein. Ebenfalls wäre es jedoch auch möglich, das Steckglied 12 klappbar an der Reide 22 anzubringen, sodass das Steckglied 12 in die Reide 22 hineingeklappt werden kann, wenn es nicht benötigt wird.

Unter Bezugnahme auf die Fig. 2 wird nun eine andere Ausführungsform eines Schlüssels 10 beschrieben, welcher bis auf die Ausbildung des Steckglieds 12 dem in der Fig. 1 dargestellten Schlüssel entspricht. So ist bei dem Steckglied 12 des in der Fig. 2 dargestellten Schlüssels 10 die USB-Steckschnittstelle nicht am freien Ende des Steckglieds 12 ausgebildet. Vielmehr befindet sich bei dem in der Fig. 2 dargestellten Schlüssel am freien Ende des Steckglieds 12 der mechanisch codierte Eingriffsabschnitt 14 in Form eines Schüsselbarts, wohingegen sich die USB-Steckschnittstelle 16 in direkter Nähe zu der Reide 22 des Schlüssels 10 befindet.

Diese Ausbildung erweist sich gegenüber der in der Fig. 1 dargestellten Ausbildung eines Fahrzeugschlüssels 10 dahingehend als vorteilhaft, dass dadurch die Strom- und Datenleitungen von der USB-Steckschnittstelle 16 zu dem Datenspeicher 18 und dem Stromspeicher 20 nicht über die gesamte Stecklänge des mechanisch codierten Eingriffsabschnitts 14 hinweggeführt werden müssen.

In der Fig. 3 ist eine weitere Ausführungsform eines erfindungsgemäßen Schlüssels 10 dargestellt, welcher bis auf die Ausbildung des Steckglieds 12 wiederum dem in der Fig. 1 dargestellten Schlüssel entspricht. So ist bei dem Steckglied 12 des in der Fig. 3 dargestellten Schlüssels 10 die USB-Steckschnittstelle nicht am freien Ende des Steckglieds 12 ausgebildet. Vielmehr wird bei der in der Fig. 3 dargestellten Ausführungsform das Steckglied 12 gewissermaßen durch die USB-Steckschnittstelle 16 selbst gebildet, welche ein metallisches Steckergehäuse 30 aufweist, an dem der mechanisch codierte Eingriffsabschnitte 14 über die Stecklänge der USB-Steckschnittstelle 16 hinweg ausgebildet ist. Der mechanisch codierte Eingriffsabschnitt 14 ist dabei entlang der Stoßstelle 32 ausgebildet, entlang derer sich die Randbereiche der das Steckergehäuse 30 bildenden metallischen Ummantelung gegenüberliegen.

### Bezugszeichenliste

- 10: Schlüssel
- 12: Steckglied
- 14: Eingriffsabschnitt
- 16: USB-Steckschnittstelle
- 18: Datenspeicher
- 20: Stromspeicher
- 22: Reide
- 24: Taste "Auf"
- 26: Taste "Zu"
- 28: Taste "Kofferraum"
- 30: Steckergehäuse
- 32: Stoßstelle

## Patentansprüche

1. Schlüssel (10) für ein Kraftfahrzeug, umfassend:
- zumindest einen mechanisch codierten Eingriffsabschnitt (14) zur Betätigung eines mechanischen Fahrzeugschlosses, und
- eine mit einem Datenspeicher (18) gekoppelte USB-Steckschnittstelle (16) zum Datenaustausch von auf dem Datenspeicher (18) speicherbaren Daten,
**dadurch gekennzeichnet, dass**
die USB-Steckschnittstelle (16) und der codierte Eingriffsabschnitt (14) an einem gemeinsamen, in das Fahrzeugschloss einführbaren Steckglied (12) vorgesehen sind.

2. Schlüssel nach Anspruch 1,
**dadurch gekennzeichnet, dass**
der zumindest eine mechanisch codierte Eingriffsabschnitt (14) und die USB-Steckschnittstelle (16) in Steckrichtung betrachtet hintereinander an dem Steckglied (12) vorgesehen sind.

3. Schlüssel nach Anspruch 1 oder 2,
**dadurch gekennzeichnet, dass**
der zumindest eine mechanisch codierte Eingriffsabschnitt (14) am freien Ende des Steckglieds (12) in Fortsetzung zu der USB-Steckschnittstelle (16) ausgebildet ist.

4. Schlüssel nach Anspruch 1 oder 2,
**dadurch gekennzeichnet, dass**
die USB-Steckschnittstelle (16) am freien Ende des Steckglieds (12) in Fortsetzung zu dem zumindest einen mechanisch codierten Eingriffsabschnitt (14) ausgebildet ist.

5. Schlüssel nach Anspruch 1,
**dadurch gekennzeichnet, dass**
der zumindest eine mechanisch codierte Eingriffsabschnitt (14) im Bereich der USB-Steckschnittstelle (16), insbesondere über deren Stecklänge hinweg ausgebildet ist.

6. Schlüssel nach zumindest einem der vorstehenden Ansprüche,
**dadurch gekennzeichnet, dass**
die USB-Steckschnittstelle (16) ein metallisches Steckergehäuse (30) aufweist, an dem der zumindest eine mechanisch codierte Eingriffsabschnitt (14) ausgebildet ist.

7. Schlüssel nach Anspruch 6,
**dadurch gekennzeichnet, dass**
das Steckergehäuse (30) in Steckrichtung betrachtet eine Stoßstelle (32) aufweist, entlang derer sich zwei Randbereiche der das Steckergehäuse (30) bildenden Ummantelung gegenüberliegen, wobei zumindest einer der Randbereiche als ein mechanisch codierter Eingriffsabschnitt (14) ausgebildet ist.

8. Schlüssel nach zumindest einem der vorstehenden Ansprüche,
**dadurch gekennzeichnet, dass**
die USB-Steckschnittstelle (14) als USB-Stecker vom Typ Mini-A, Mini-B oder Mini-AB ausgebildet ist.

9. Schlüssel nach zumindest einem der vorstehenden Ansprüche,
**dadurch gekennzeichnet, dass**
der Schlüssel (10) ein elektronischer Fahrzeugschlüssel ist.

10. Schlüssel nach zumindest einem der vorstehenden Ansprüche, ferner umfassend:
- einen Stromspeicher (20), welcher mit der USB-Steckschnittstelle (16) gekoppelt ist.

## Claims

1. Key (10) for a motor vehicle, comprising:
- at least a mechanical coded engagement section (14) for actuation of a mechanical vehicle lock, and
- an USB plug-in interface (16) coupled to a data store (18) for data exchange of data storable in the data store (18),
**characterized in that**
the USB plug-in interface (16) and the coded engagement section (14) are provided at a common plug-in member (12) insertable into the vehicle lock.

2. Key according to claim 1,
**characterized in that**
the at least one mechanical coded engagement section (14) and the USB plug-in interface (16) are provided in series, with regard to the plug-in direction, at the plug-in member (12).

3. Key according to claim 1 or 2,
**characterized in that**
the at least one mechanical coded engagement section (14) at the free end of the plug-in member (12) is formed in continuation to the USB plug-in interface (16).

4. Key according to claim 1 or 2,
**characterized in that**
the USB plug-in interface (16) is formed at the free end of the plug-in member (12) in continuation to the at least one mechanical coded engagement section (14).

5. Key according to claim 1,
**characterized in that**
the at least one mechanical coded engagement section (14) is formed in the area of the USB plug-in interface (16), in particular over its plug-in length.

6. Key according to at least one of the preceding claims,
**characterized in that**
the USB plug-in interface (16) comprises a metallic connector housing (30), where the at least one mechanical coded engagement section (14) is formed.

7. Key according to claim 6,
**characterized in that**
the connector housing (30) comprises a joint location (32), with regard to the plug-in direction, along which two marginal areas of the casing forming the connector housing (30) face each other, wherein at least one of the marginal areas is formed as a mechanical coded engagement section (14).

8. Key according to at least one of the preceding claims,
**characterized in that**
the USB plug-in interface (14) is formed as an USB plug of the type Mini-A, Mini-B or Mini-AB.

9. Key according to at least one of the preceding claims,
**characterized in that**
the key (10) is an electronic vehicle key.

10. Key according to at least one of the preceding claims, further comprising:
- a current store (20) coupled to the USB plug-in interface (16).

## Revendications

1. Clé (10) pour un véhicule automobile, comprenant :
- au moins un tronçon d'engagement (14) avec codage mécanique pour actionner une serrure de véhicule mécanique, et
- une interface USB mâle (16) couplée à une mémoire de données (18) pour un échange de données susceptibles d'être mémorisées sur la mémoire de données (18),
**caractérisée en ce que** l'interface USB mâle (16) et le tronçon d'engagement codé (14) sont prévues sur un organe enfichable (12) commun susceptible d'être introduit dans la serrure de véhicule.

2. Clé selon la revendication 1,
**caractérisée en ce que** ledit au moins un tronçon d'engagement (14) avec codage mécanique et l'interface USB mâle (16) sont prévus l'un derrière l'autre, vus en direction d'enfichage, sur l'organe enfichable (12).

3. Clé selon la revendication 1 ou 2,
**caractérisée en ce que** ledit au moins un tronçon d'engagement (14) avec codage mécanique est réalisé à l'extrémité libre de l'organe enfichable (12) en prolongement de l'interface USB mâle (16).

4. Clé selon la revendication 1 ou 2,
**caractérisée en ce que** l'interface USB mâle (16) est réalisé à l'extrémité libre de l'organe enfichable (12) en prolongement dudit au moins un tronçon d'engagement (14) avec codage mécanique.

5. Clé selon la revendication 1,
**caractérisée en ce que** ledit au moins un tronçon d'engagement (14) avec codage mécanique est réalisé dans la région de l'interface USB mâle (16), en particulier au-delà de sa longueur enfichable.

6. Clé selon l'une au moins des revendications précédentes,
**caractérisée en ce que** l'interface USB mâle comprend un boîtier enfichable métallique (30) sur lequel est réalisé ledit au moins un tronçon d'engagement (14) avec codage mécanique.

7. Clé selon la revendication 6,
**caractérisée en ce que** le boîtier enfichable (30) comporte, considéré en direction d'enfichage, un emplacement d'aboutement (32) le long duquel s'opposent deux zones de bordure de l'enveloppe qui constitue le boîtier enfichable (30), et l'une au moins des zones de bordure est réalisée à titre de tronçon d'engagement (14) avec codage mécanique.

8. Clé selon l'une au moins des revendications précédentes,
**caractérisée en ce que** l'interface USB mâle (14) est réalisée sous forme de fiche USB mâle du type mini-A, mini-B ou mini-AB.

9. Clé selon l'une au moins des revendications précédentes,
**caractérisée en ce que** la clé (10) est une clé électronique de véhicule.

10. Clé selon l'une au moins des revendications précédentes, comprenant en outre :
- un accumulateur électrique (20) qui est accouplé à l'interface USB mâle (16).
